# EUROPEAN PATENT SPECIFICATION

(11) **EP 1 730 945 B1**
(45) Date of publication and mention of the grant of the patent: **26.05.2010**
(21) Application number: 04800777.7
(22) Date of filing: 08.11.2004
(51) Int. Cl.: H04N 1/00

(54) **HAND-HELD ELECTRONIC DEVICES CONFIGURED TO PROVIDE IMAGE DATA**
ZUR BEREITSTELLUNG VON BILDDATEN KONFIGURIERTE IN DER HAND GEHALTENE ELEKTRONISCHE EINRICHTUNGEN
DISPOSITIFS ELECTRONIQUES A MAIN CONFIGURES POUR FOURNIR DES DONNEES D'IMAGES

(30) Priority: 25.03.2004 US 809179
(43) Date of publication of application: 13.12.2006
(73) Proprietor: Sony Ericsson Mobile Communications AB, 221 88 Lund (SE)
(72) Inventor: CAMP, JR., William O., Chapel Hill, NC 27514 (US)
(74) Representative: Chamberlain, Alan James
(86) International application number: PCT/US2004/036884
(87) International publication number: WO 2005/104521

(56) References cited:
- US-A1- 2002 128 062
- US-A1- 2003 013 483
- US-A1- 2003 103 570
- US-B1- 6 278 481
- US-B1- 6 385 772

## Description

### FIELD OF THE INVENTION

The present invention relates to the field of electronics and more particularly to methods, devices, and systems for displaying information.

### BACKGROUND OF THE INVENTION

While many hand-held electronic devices such as radiotelephones and personal digital assistants continue to get smaller, the desire to display greater amounts of information is increasing. Accordingly, a demand for ever larger displays may be in conflict which a demand for ever smaller hand-held electronic devices. For example, increased use of text messaging in cellular communications may increase demand for larger mobile terminal displays to facilitate use and/or viewing of this information. In addition, increases in data services provided in hand-electronic devices may increase demand for larger mobile terminal displays to facilitate viewing by more than one person at a time.

US2003/103570 describes a method of optimising bandwidth of a wireless link between a display device and an image data player.

### SUMMARY

According in embodiments of the present invention, a hand-held electronic device may include memory, a transmitter, and a controller. The memory is configured to store image data within the hand-held electronic device, and the transmitter is configured to provide a wireless link with a remote electronic display.
The controller is coupled to the memory and to the transmitter. Moreover, the controller is configured to provide the image data in an Internet protocol format, and the transmitter is configured to transmit the image data over the wireless link in the Internet protocol format.

In addition, a user interface may be coupled to the controller with the user interface being configured to accept user input of pointer commands and with the controller and transmitter being configured to transmit the pointer commands over the wireless link to the remote electronic display. The pointer commands may be transmitted in the Internet protocol format, or the pointer commands may be transmitted in a format other than the Internet protocol format. Moreover, the transmitter may be a short range transmitter, and the hand-held electronic device may also include a long range transceiver configured to provide long-range communications such as radio telephone communication and/or packet switched data communications.

The transmitter may be configured to provide a wireless link according to at least one of a WiFi standard, a BlueTooth standard, and/or an infrared standard, and the Internet protocol format may be HTML and/or XML. The controller may also provide at least one of a contacts database, a calendar, an e-mail transmitter/receiver, a digital music player, a task list, and/or a wireless internet browser, and the image data may include a slide presentation.

According to additional embodiments of the present invention, an electronic display device may include a display and an internet protocol browser. The display is configured to display electronic data. The Internet protocol browser is configured to receive image data and pointer commands from a hand-held electronic device without a wired coupling to the hand-held electronic device. The image data is received at the Internet protocol browser in an Internet protocol format, and the Internet protocol browser is configured to provide the image data visually using the display responsive to the pointer commands. More particularly, the display may be a monitor or proj ector.

Moreover, the pointer commands may be received at the Internet protocol browser in the Internet protocol format, or the pointer commands may be received at the Internet protocol browser in a format other than the Internet protocol format. In addition, the Internet protocol format may be HTML and/or XML, and the image data may be a slide presentation.

According to still additional embodiments of the present invention, a method of providing a visual presentation using a hand-held electronic device includes storing image data within the hand-held electronic device. The image data is provided in an Internet protocol format, and the image data is transmitted over a wireless link to a remote electronic display in the Internet protocol format.

In addition, accepting user input of pointer commands may be accepted, and the pointer commands may be transmitted over the wireless link to the remote electronic display. The pointer commands may be transmitted in the Internet protocol format, or the pointer commands may be transmitted in a format other than the Internet protocol format.

The image data is transmitted using a short range protocol, and long-range wireless communications may also be provided. More particularly, providing long range wireless communications may include providing radiotelephone communications and/or packet switched communications. Moreover, transmitting the image data may include transmitting the image data using at least one of a WiFi standard, a BlueTooth standard, and/or an infrared standard, and the Internet protocol format may be HTML and/or XML.

At least one of a contacts database, a calendar, an e-mail transmitter/receiver, a digital music player, a task list, and/or a wireless internet browser may also be provided, and the image data may be a slide presentation.

According to yet additional embodiments of the present invention, a method of operating an electronic display device may include receiving image data and pointer commands from a hand-held electronic device without a wired coupling to the hand-held electronic device. Moreover, the image data is received in an Internet protocol format, and the image data is provided visually responsive to the pointer commands.

More particularly, the image data may be provided using at least one of a monitor and/or a projector, and the pointer commands may be received at the Internet protocol browser in the Internet protocol format. In addition, the pointer commands may be received at the Internet protocol browser in a format other than the Internet protocol format. The Internet protocol format may be HTML and/or XML, and the image data may include a slide presentation.

### BRIEF DESCRIPTION OF THE DRAWINGS

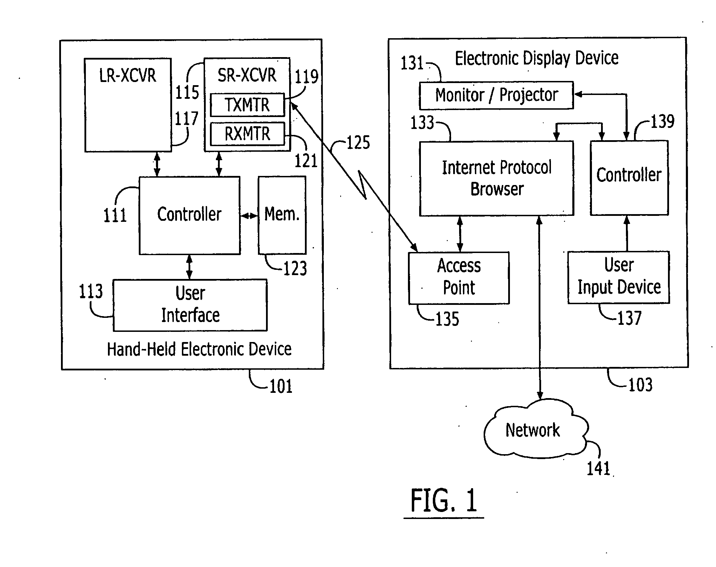

Figures 1-3 are block diagrams illustrating systems, methods, and devices according to embodiments of the present invention.

### DETAILED DESCRIPTION

The present invention will now be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

As will be appreciated by those of skill in the art, the present invention may be embodied as methods or devices. Accordingly, the present invention may take the form of a hardware embodiment, a software embodiment or an embodiment combining software and hardware aspects. It will also be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. As used herein, the term "and/or" includes any and all combinations of one or more of the associated listed items.

A display of a hand-held electronic device (such as a radiotelephone or a personal digital assistant) can be used to provide image data to a user of the handheld electronic device. In a radiotelephone, for example, a display on the body of the radiotelephone can show a telephone number dialed, a telephone number of a calling party (caller identification), information from an electronic address book stored in the radiotelephone, calendar information, e-mail, text messages, screens for electronic games, photographs, pictures, video clips, internet pages, etc. The size of the display of the hand-held electronic device, however, may be limited by the size of the electronic device. Accordingly, some of the image data may be difficult to view on the relatively small display typically provided on a hand-held electronic device.

Moreover, functionalities of hand-held electronic devices are expanding as processing power thereof increases. For example, word processor, spread-sheet, and presentation functions may be provided on a hand-held electronic device. More particularly, a slide presentation function may be provided on a hand-held electronic device using software such as PowerPoint™ provided by Microsoft Corp.

According to embodiments of the present invention, image data (such as a slide presentation) may be shown on the display of a hand-held electronic device. In addition or in an alternative, image data (such as a slide presentation) can be transmitted in an internet protocol format via a wireless link to an Internet protocol browser of an electronic display device providing a larger display. The electronic display device, for example, may be a television, a monitor, a personal computer, and/or a projector including an Internet protocol browser. Moreover, the electronic display device may provide a larger display than would otherwise be available on the portable electronic device.

The wireless link between the hand-held electronic device may be provided, for example, using a short range communications standard such as a WiFi Standard (according to an 802.11 standard), an infrared standard, and/or the BlueTooth standard. The BlueTooth standard is discussed, for example, by Sailesh Rathi in the reference entitled "BlueTooth Protocol Architecture" from Dedicated Systems Magazine, 2000 Q4, pages 28-33. Short range communications standards are also discussed in U.S. Application Serial No. 10/655,422 filed September 4,2003, and assigned to the assignee of the present invention.

As shown in Figure 1, systems, methods, and devices according to embodiments of the present invention may include a hand-held electronic device **101** (such as a radiotelephone and/or a personal digital assistant) and an electronic display device **103** such as a monitor and/or projector. More particularly, the hand-held electronic device **101** may include a controller **111,** a user interface **113, a** short range transceiver **115** (including transmitter **119** and receiver **121),** memory **123** and a long range transceiver **117.** The electronic display device **103** may include a display **131** (such as a monitor and/or projector), an Internet protocol browser **133,** a wireless access point **135,** a user input device **137,** and a controller **139.**

As discussed above, the hand-held electronic device **101** may be a personal digital assistant and/or a radiotelephone. Moreover, the user interface **113** may include a keypad, a display (such as a liquid crystal display), a touch sensitive display, a dial, a speaker, a directional key, and/or a microphone. According to conventional radiotelephone operations, voice data may be received from a speaker of the user interface **113,** processed though controller **111,** and transmitted to the radiotelephone network using the long range transceiver **117.** Similarly, voice data may be received from the radiotelephone network using the long range transceiver **117,** processed though controller **111,** and reproduced using a speaker of user interface **113.** In addition or in an alternative, the long range transmitter may provide packet switched data service communications, such as General Packet Radio Service (GPRS), with a communications network.

In addition or in another alternative, the hand-held electronic device **101** may provide functionality of a personal digital assistant. For example, the controller **111** may run one or a plurality of applications such as a contacts database, a calendar, an e-mail transmitter/receiver, a digital music player, a task list, an internet browser, a word processor, a spread-sheet, a PDF file viewer, and/or presentation application (such as PowerPoint™ by Microsoft Corp.) with input being received from and output being provided to the user interface **113.** Accordingly, the hand-held electronic device **101** may provide both long range communications (such as radiotelephone and/or packet switched communications) and functionality of a personal digital assistant, or the hand-held electronic device **101** may provide functionality of a personal digital assistant without providing long range communications (in which case the long range transceiver **117** may be omitted).

The electronic display device **103** may be a free standing display device such as a projector, a monitor, or a television including an Internet protocol browser **133** therein, or the electronic display device **103** may be included as a component of a computing device such as a personal computer or a notebook computer. In some embodiments, the electronic display device **103** may be used to display image data received from the hand-held electronic device, image data received from a computer (such as a personal computer and/or a notebook computer), image data stored in the electronic display device, and/or image data received over a network **141** such as a local area network, a wide area network, and/or the internet. When displaying image data received over the network **141,** for example, the internet protocol browser **133** may query a server through the network **141** under direction of the controller **139** based on input from the user input device **137** (which may be a pointing device such as a mouse, joy stick, track ball, directional key, touch sensitive pad, touch sensitive display, etc.) associated with the electronic display device **103.** When displaying image data received from a computer, the controller **139** may be coupled directly with the computer providing the image data. An internet image projector is discussed, for example, in U.S. Patent Publication No. US 2002/0175915.

When displaying data from the hand-held electronic device **101,** a wireless link **125** can be established between the short range transceiver **115** of the hand-held electronic device **101** and the access point **135** of the electronic display device **103.**
The wireless link **125** may be provided, for example, using one or more of a WiFi standard (according to an IEEE 802.11 standard), a BlueTooth standard, and/or an infrared standard. Moreover, the wireless link **125** may include two or more wireless links provided according to the same or different communications standards. Accordingly, the short range transceiver **115** and the access point **135** may each include multiple transmitters and receivers operating according to the same or different communications standards.

For example, the wireless link **125** may include two sub-links with one sub-link being provided according to the BlueTooth standard and another sub-link being provided according to a WiFi standard. In an alternative, the wireless link **125** may include one sub-link provided according to the BlueTooth standard and another sub-link provided according to an infrared standard. In still another alternative, the wireless link **125** may include one sub-link provided according to the WiFi standard and another sub-link provided according to an infrared standard.

Image data may be stored in the memory **123** of the hand-held electronic device **101,** and the controller **111** may be configured to provide the image data in an Internet protocol format for transmission by the transmitter **119** over the wireless link **125** to the access point **135** of the electronic display device **103.** The image data can then be processed by the internet protocol browser **133** and the controller **139** and provided for viewing using display **131** (such as a cathode ray tube, liquid crystal display, plasma display, and/or projector).

The image data may be provided from the controller **111** of the hand-held electronic device **101** to the internet protocol browser **133** using an internet protocol format such as HyperText Markup Language (HTML) and/or Extensible Markup Language (XML). Accordingly, the internet protocol browser **133** of the electronic display device **103** may act as a client, and the controller **111** of the hand-held electronic device **113** may act as a server.

In addition, user input from the user interface **113** of the hand-held electronic device **101** may be used to control a pointer function of the internet protocol browser **133** of the electronic display device **131.** Typically, the pointer function of an internet protocol browser is controlled using a user input device (such as a mouse, track ball, joy stick, touch sensitive display, touch sensitive pad, directional key, dial, etc.) physically associated with the device including the browser. In the electronic display device **101** of Figure 1, the pointer function of the internet protocol browser **133** may be controlled from the user input device **137** when displaying image data from the network **141.** In addition or in an alternative, the pointer function of the internet protocol browser **133** may be controlled by the controller **111** under the direction of the user interface **113** when displaying data from the network **141.**

When displaying image data from the hand-held electronic device **101,** the pointer function of the internet protocol browser **133** may be controlled from the user interface **113** of the hand-held electronic device **101.** For example, pointer commands may be generated by the controller **111** responsive to user input through a joy stick, directional key, touch sensitive pad, touch sensitive display, dial, etc. of the user interface **113.** More particularly, pointer commands may be generated at the controller **111** responsive to user input at the user interface **113** and transmitted over the wireless link **125** to the internet protocol browser **113,** and the pointer function of the internet protocol browser **133** may be activated responsive to the pointer commands from the controller **111.** The internet protocol browser **133** can retrieve image data from the controller **111** and provide the image data on the display **131** responsive to the pointer commands received from the controller **111** over the wireless link **125.**

The pointer commands from the controller **111** may be buried in the stream of image data transmitted over the wireless link **125.** Accordingly, the image data and the pointer commands may be transmitted using a single logical data stream, for example, using a WiFi standard, a BlueTooth standard, and/or an infrared standard. When using a BlueTooth standard to transmit the image data, for example, a Human Interface Device (HID) profile provided by the BlueTooth standard may be used to transmit the pointer commands with the image data. When using an internet protocol format such as HTML and/or XML, the pointer commands may be buried in the data stream used to transmit the image data using any wireless link standard. In an alternative, the image data and the pointer commands may be transmitted using different data streams provided using the same or different wireless link standards.

In one alternative, the controller **111** may move the pointer within the application under direction of the user interface **113,** and the total image may be transferred to the electronic display device **103** without transferring the pointer commands to the electronic display device **103.** In a second alternative, the controller **111** may move the pointer within the application under direction of the user interface **137,** and the total image may be transferred to the electronic display device without transferring the pointer commands to the electronic display device **103.** Accordingly, the pointer commands may need to be transferred from the electronic display device **103** to the hand-held electronic device **101**. In a third alternative, the controller **111** may move the pointer in the browser 133 under the direction of the user interface **113**. Accordingly, the pointer commands may be transferred from the hand-held device **101** to the electronic display device **103.** In a fourth alternative, the controller **111** may move the pointer in the browser **113** under direction of the user interface **137.** Accordingly, the pointer commands may be transferred from the electronic display device **103** to the hand-held electronic device **101** and back to the electronic display device **103.** In a fifth alternative, the controller **139** may move the pointer in the browser **133** under the direction of the user interface **137.** Accordingly, image data may be transmitted from the hand-held electronic device **101** to the electronic display device **103** without transmitting pointer commands.

According to embodiments of the present invention, image data may be stored in memory **123** of hand-held electronic device **101,** transmitted from the hand-held electronic device over a wireless link **125** to an electronic display device **103** for viewing using display **131.** More particularly, a presentation (such as a PowerPoint™ presentation) may be downloaded to memory **123** (such as over a USB connection) or generated by controller **111** (responsive to user input) and stored in memory **123.** The presentation can then be easily transported in the hand-held electronic device to a meeting, and the presentation can be provided over a short range wireless link **125** to an electronic display device **103** in the meeting room. By providing display **131** as a projector or a monitor having a large screen, the presentation from the hand-held electronic device can be displayed to a large number of people.

Moreover, pointer commands from the user interface **113** of the hand-held electronic device **101** can be used to advance through slides of the presentation by activating a pointer function of the internet protocol browser **133.** In addition, the image data can also be provided on a display of the user interface **113** of the hand-held electronic device **101** at the same time that the image data is provided on display **131** of the electronic display device **103.** Accordingly, a presenter can use a display of the hand-held electronic device **101** to check the slide currently displayed without turning away from an audience to glance at the projected image.

In other embodiments, the electronic display device **103** may include a display **131** such as a monitor, cathode ray tube, liquid crystal display, plasma display, projector, etc. having an internet protocol browser **133** associated therewith. Image data can be transmitted over the wireless link **125** to allow the user to display personal information on the larger display **131** of the electronic display device **103** rather than using a much smaller display of the hand-held electronic device **101.** For example, the user may elect to view e-mail, to view a calendar, to view game screens, to view an internet page down loaded to the hand-held electronic device, to view a photograph stored in the hand-held electronic device, to view a video clip stored in the hand-held electronic device, etc. using a remote electronic display device **103** as shown in Figure 1.

The controller **139** of the electronic display device **103** may also police access to the internet protocol browser **133** through the access point **135.** In other words, the controller **139** may only allow authorized hand-held electronic devices **101** to have access to the internet protocol browser **133.** In a home or business environment, an authorized hand-held electronic device **101** may be assigned an access code so that the controller **139** of the electronic display device **131** can identify the presence of the authorized hand-held electronic device **101** and allow access to the internet protocol browser **133.** For example, the previously assigned access code may be stored in memory **123** of the hand-held electronic device **101,** and the previously assigned access code may be transmitted over the wireless link **125** responsive to either a user command provided at the user interface **113** or responsive to a query or beacon from the electronic display device **103.** Moreover, in a closed or secure environment, the hand-held electronic device may automatically detect the presence of an available electronic device **103,** and the application being run on the hand-held electronic device may be provided automatically on the display **131** of the available electronic display device **103.**

In a public environment, the controller **139** of the electronic display device **103** may only allow access to previously authorized hand-held electronic devices **101** with access codes as discussed above. By recording access codes of hand-held electronic devices to which access has been granted, the controller **139** can track usage for billing purposes. By way of example, a radiotelephone may have a identification number such as a Mobile Identification Number (MIN) and/or an Electronic Serial Number (ESN) that can be used by the controller **139** to determine whether to grant access and/or track billing information. Other information, such as may be provided on a Secure Interface Module (SIM) card may also be used.

In an alternative, the controller **139** may grant access to a hand-held electronic device **101** based on entry and verification of payment information, such as a credit card number. For example, a user of a hand-held electronic device **101** may initiate a session with the electronic display device **103,** and responsive to a query from the electronic display device **103,** the user may enter credit card information through the user interface **113,** and the credit card information may be transmitted over the wireless link **125.**

The sharing of image data over the wireless link **125** may be initiated by a user of the hand-held electronic device **101** upon recognizing the physical presence of an electronic display device **103** and entering commands through the user interface **113** to establish the wireless link **125.** In an alternative, the access point **135** may wirelessly transmit an identification beacon, and upon receipt of the beacon, the hand-held electronic device **101** may automatically establish the wireless link **125** (with appropriate authorization). In another alternative, a prompt may be provided on the user interface **113** to identify the available electronic display device **103** upon receipt of the beacon from the access point **135.** In yet another alternative, a beacon may be transmitted by the hand-held electronic device **101,** and upon receipt of the beacon, the access point **135** may respond with an indication of availability. Upon receipt of the indication of availability, the wireless link **125** may be established automatically, or a prompt may be provided at the user interface **113** with user input being required to establish the wireless link **125.**

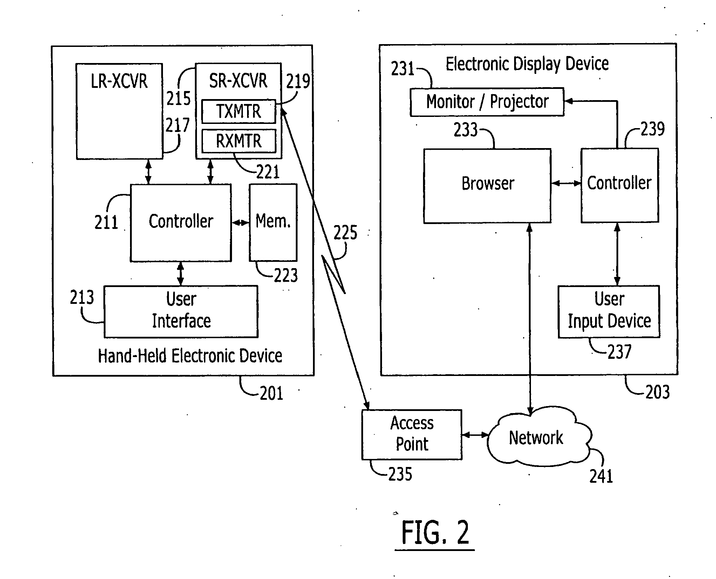

As shown in Figure 2, systems, methods, and devices according to additional embodiments of the present invention may include a hand-held electronic device **201** (such as a radiotelephone and/or a personal digital assistant), an electronic display device **203** such as a monitor and/or projector, and a wireless access point **235** coupled to the electronic display device **203** through a network **241** such as a local area network, a wide area network, and/or the internet. More particularly, the hand-held electronic device **201** may include a controller **211,** a user interface **213,** a short range transceiver **215** (including transmitter **219** and receiver **221),** memory **223,** and a long range transceiver **217.** The electronic display device **203** may include a display **231** (such as a monitor and/or projector), an Internet protocol browser **233,** a user input device **237,** and a controller **239.**

As discussed above, the hand-held electronic device **201** may be a personal digital assistant and/or a radiotelephone. Moreover, the user interface **213** may include a keypad, a display (such as a liquid crystal display), a touch sensitive display, a touch sensitive pad, a dial, a speaker, a direction key, and/or a microphone. According to conventional radiotelephone operations, voice data may be received from a speaker of the user interface **213,** processed though controller **211,** and transmitted to the radiotelephone network using the long range transceiver **217.** Similarly, voice data may be received from the radiotelephone network using the long range transceiver **217,** processed though controller **211,** and reproduced using a speaker of user interface **213.** In addition or in an alternative, the long range transmitter may provide packet switched data service communications, such as General Packet Radio Service (GPRS), with a communications network.

In addition or in another alternative, the hand-held electronic device **201** may provide functionality of a personal digital assistant. For example, the controller **211** may run one or a plurality of applications such as a contacts database, a calendar, an e-mail transmitter/receiver, a digital music player, a task list, an internet browser, a word processor, a spread-sheet, a PDF file viewer, and/or presentation application (such as PowerPoint™ by Microsoft Corp.) with input being received from and output being provided to the user interface **213.** Accordingly, the hand-held electronic device **201** may provide both long range communications (such as radiotelephone and/or packet switched communications) and functionality of a personal digital assistant, or the hand-held electronic device **201** may provide functionality of a personal digital assistant without providing long range communications (in which case the long range transceiver **217** may be omitted).

The electronic display device **203** may be a free standing display device such as a projector, a monitor, or a television including an Internet protocol browser **233** therein, or the electronic display device **203** may be included as a component of a computing device such as a personal computer or a notebook computer. In some embodiments, the electronic display device **203** may be used to display image data received from the hand-held electronic device **201,** image data received from a computer (such as a personal computer and/or a notebook computer), image data stored in the electronic display device, and/or image data received from a server device over the network **241.** When displaying image data received over the network **241,** for example, the internet protocol browser **233** may query a server through the network **241** under direction of the controller **239** based on input from the user input device **237** (which may be a pointing device such as a mouse, track ball, joy stick, directional key, touch sensitive pad, touch sensitive display, etc.) associated with electronic display device **203.** When displaying image data received from a computer, the controller **239** may be coupled directly with the computer providing the image data. An internet image projector is discussed, for example, in U.S. Patent Publication No. US 2002/0175915.

When displaying data from the hand-held electronic device **201,** a wireless link **225** can be established between the short range transceiver **215** of the hand-held electronic device **201** and the access point **235** coupled to the electronic display device **203** (either directly or through the network **241).** The wireless link **225** may be provided, for example, using one or more of a WiFi standard (according to an IEEE 802.11 standard), a BlueTooth standard, and/or an infrared standard. Moreover, the wireless link **225** may include two or more wireless links provided according to the same or different communications standards. Accordingly, the short range transceiver **215** and the access point **235** may each include multiple transmitters and receivers operating according to the same or different communications standards.

For example, the wireless link **225** may include two sub-links with one sub-link being provided according to the BlueTooth standard and another sub-link being provided according to a WiFi standard. In an alternative, the wireless link **225** may include one sub-link provided according to the BlueTooth standard and another sub-link provided according to an infrared standard. In still another alternative, the wireless link **225** may include one sub-link provided according to the WiFi standard and another sub-link provided according to an infrared standard.

Image data may be stored in the memory **223** of the hand-held electronic device **201,** and the controller **211** may be configured to provide the image data in an Internet protocol format for transmission by the transmitter **219** over the wireless link **225** to the access point **235** and over the network **241** to internet protocol browser **233** of the electronic display device **203.** The image data can then be processed by the internet protocol browser **233** and the controller **239** and provided for viewing using display **231** (such as a cathode ray tube, liquid crystal display, plasma display, and/or projector).

According to embodiments of Figure 2, the access point **235** may be located in a same room as the electronic display device **203** so that a short range wireless link can provide the interconnection while using the hand-held electronic device to give a presentation. The coupling between the access point **235** may be provided through the network **241,** for example, for ease of connection. In an alternative, the access point **235** may be coupled directly to the electronic display device **203.** In another alternative, the wireless link **225** may be a long range communications link (such as a radiotelephone link and/or a GPRS link) and the access point **235** may be a network base station. Accordingly, the access point **235** may not need to be located in a same room as the electronic display device **203,** and a separate short range transceiver **215** may not be required.

The image data may be provided from the controller **211** of the hand-held electronic device **201** to the internet protocol browser **233** using an internet protocol format such as HyperText Markup Language (HTML) and/or Extensible Markup Language (XML). Accordingly, the internet protocol browser **233** of the electronic display device **203** may act as a client, and the controller **211** of the hand-held electronic device **213** may act as a server.

In addition, user input from the user interface **213** of the hand-held electronic device **201** may be used to control a pointer function of the internet protocol browser **233** of the electronic display device **231.** Typically, the pointer function of an internet protocol browser is controlled using a user input device (such as a mouse, track ball, joy stick, directional key, touch sensitive pad, touch sensitive display, dial, etc.) physically associated with the device including the browser. In the electronic display device **203** of Figure 2, the pointer function of the internet protocol browser **233** may be controlled from the user input device **237** when displaying conventional image data from the network **241.** In addition or in an alternative, the pointer function of the internet protocol browser **233** may be controlled by the controller **211** under the direction of the user interface **213** when displaying data from the network **241.**

When displaying image data from the hand-held electronic device **201,** however, the pointer function of the internet protocol browser **233** may be controlled from the user interface **213** of the hand-held electronic device **201.** For example, pointer commands may be generated by the controller **211** responsive to user input through a joy stick, directional key, touch sensitive pad, touch sensitive display, dial, etc. of the user interface **213.** More particularly, pointer commands may be generated at the controller **211** responsive to user input at the user interface **213** and transmitted over the wireless link **225** to the internet protocol browser **213,** and the pointer function of the internet protocol browser **233** may be activated responsive to the pointer commands from the controller **211.** The internet protocol browser **233** can retrieve image data from the controller **211** and provide the image data on the display **231** responsive to the pointer commands received from the controller **211** over the wireless link **225.**

The pointer commands from the controller **211** may be buried in the stream of image data transmitted over the wireless link **225.** Accordingly, the image data and the pointer commands may be transmitted using a single logical data stream, for example, using a WiFi standard, a BlueTooth standard, and/or an infrared standard. When using a BlueTooth standard to transmit the image data, for example, a Human Interface Device (HID) profile provided by the BlueTooth standard may be used to transmit the pointer commands with the image data. When using an internet protocol format such as HTML and/or XML, the pointer commands may be buried in the data stream used to transmit the image data using any wireless link standard. In an alternative, the image data and the pointer commands may be transmitted using different data streams provided using the same or different wireless link standards.

In one alternative, the controller **311** may move the pointer within the application under direction of the user interface **313,** and the total image may be transferred to the electronic display device **303** without transferring the pointer commands to the electronic display device **303.** In a second alternative, the controller **311** may move the pointer within the application under direction of the user interface **337,** and the total image may be transferred to the electronic display device without transferring the pointer commands to the electronic display device **303.** Accordingly, the pointer commands may need to be transferred from the electronic display device **303** to the hand-held electronic device **301.** In a third alternative, the controller **311** may move the pointer in the browser **333** under the direction of the user interface **313.** Accordingly, the pointer commands may be transferred from the hand-held device **301** to the electronic display device **303.** In a fourth alternative, the controller **311** may move the pointer in the browser **333** under direction of the user interface **337..** Accordingly, the pointer commands may be transferred from the electronic display device **303** to the hand-held electronic device **301** and back to the electronic display device **303.** In a fifth alternative, the controller **339** may move the pointer in the browser **333** under the direction of the user interface **337.** Accordingly, image data may be transmitted from the hand-held electronic device **301** to the electronic display device **303** without transmitting pointer commands.

According to embodiments of the present invention, image data may be stored in memory **223** of hand-held electronic device **201,** transmitted from the hand-held electronic device over a wireless link **225** to an electronic display device **203** for viewing using display **231.** More particularly, a presentation (such as a PowerPoint™ presentation) may be downloaded to memory **223** (such as over a USB connection) or generated by controller **211** (responsive to user input) and stored in memory **223.** The presentation can then be easily transported in the hand-held electronic device to a meeting, and the presentation can be provided over a short range wireless link **225** to an electronic display device **203** in the meeting room. By providing display **231** as a projector or a monitor having a large screen, the presentation from the hand-held electronic device can be displayed to a large number of people.

Moreover, pointer commands from the user interface **213** of the hand-held electronic device **201** can be used to advance through slides of the presentation by activating a pointer function of the internet protocol browser **233.** In addition, the image data can also be provided on a display of the user interface **213** of the hand-held electronic device **201** at the same time that the image data is provided on display **231** of the electronic display device **203.** Accordingly, a presenter can use a display of the hand-held electronic device **201** to check the slide currently displayed without turning away from an audience to glance at the projected image.

In other embodiments, the electronic display device **203** may include a display **231** such as a monitor, cathode ray tube, liquid crystal display, plasma display, projector, etc. having an internet protocol browser **233** associated therewith. Image data can be transmitted over the wireless link **225** to allow the user to display personal information on the larger display **231** of the electronic display device **203** rather than using a much smaller display of the hand-held electronic device **201.** For example, the user may elect to view e-mail, to view a calendar, to view game screens, to view an internet page down loaded to the hand-held electronic device, to view a photograph stored in the hand-held electronic device, to view a video clip stored in the hand-held electronic device, etc. using a remote electronic display device **203** as shown in Figure 2.

The controller **239** of the electronic display device **203** may also police access to the internet protocol browser **233** through the access point **235.** In other words, the controller **239** may only allow authorized hand-held electronic devices **201** to have access to the internet protocol browser **233.** In a home or business environment, an authorized hand-held electronic device **201** may be assigned an access code so that the controller **239** of the electronic display device **231** can identify the presence of the authorized hand-held electronic device **201** and allow access to the internet protocol browser **233.** For example, the previously assigned access code may be stored in memory **223** of the hand-held electronic device **201,** and the previously assigned access code may be transmitted over the wireless link **225** responsive to either a user command provided at the user interface **213** or responsive to a query or beacon from the electronic display device **203.** Moreover, in a closed or secure environment, the hand-held electronic device may automatically detect the presence of an available electronic device **203,** and the application being run on the hand-held electronic device may be provided automatically on the display **231** of the available electronic display device **203.**

In a public environment, the controller **239** of the electronic display device **203** may only allow access to previously authorized hand-held electronic devices **201** with access codes as discussed above. By recording access codes of hand-held electronic devices to which access has been granted, the controller **239** can track usage for billing purposes. By way of example, a radiotelephone may have an identification number such as a Mobile Identification Number (MIN) and/or an Electronic Serial Number (ESN) that can be used by the controller **239** to determine whether to grant access and/or track billing information. Other information, such as may be provided on a Secure Interface Module (SIM) card may also be used.

In an alternative, the controller **239** may grant access to a hand-held electronic device 201 based on entry and verification of payment information, such as a credit card number. For example, a user of a hand-held electronic device **201** may initiate a session with the electronic display device **203,** and responsive to a query from the electronic display device **203,** the user may enter credit card information through the user interface **213,** and the credit card information may be transmitted over the wireless link **225.**

The sharing of image data over the wireless link **225** may be initiated by a user of the hand-held electronic device **201** upon recognizing the physical presence of an electronic display device **203** and entering commands through the user interface **213** to establish the wireless link **225.** In an alternative, the access point **235** may be proximate to the electronic display device **203,** and the access point **235** may wirelessly transmit an identification beacon, and upon receipt of the beacon, the hand-held electronic device **201** may automatically establish the wireless link **225** (with appropriate authorization). In another alternative, a prompt may be provided on the user interface **213** to identify the available electronic display device **203** upon receipt of the beacon from the access point **235.** In yet another alternative, a beacon may be transmitted by the hand-held electronic device **201,** and upon receipt of the beacon, the access point **235** may respond with an indication of availability. Upon receipt of the indication of availability, the wireless link **225** may be established automatically, or a prompt may be provided at the user interface **213** with user input being required to establish the wireless link **225.**

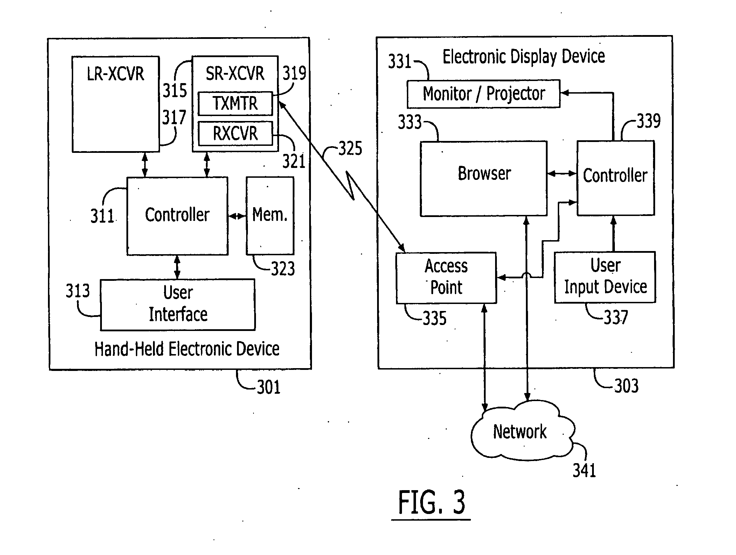

As shown in Figure 3, systems, methods, and devices according to yet additional embodiments of the present invention may include a hand-held electronic device **301** (such as a radiotelephone and/or a personal digital assistant) and an electronic display device **303** such as a monitor and/or projector. More particularly, the hand-held electronic device **301** may include a controller **311,** a user interface **313,** a short range transceiver **315** (including transmitter **319** and receiver **321**), memory **323,** and a long range transceiver **317.** The electronic display device **303** may include a display **331** (such as a monitor and/or projector), an Internet protocol browser **333,** a wireless access point **335,** a user input device **337,** and a controller **339.**

As discussed above, the hand-held electronic device **301** may be a personal digital assistant and/or a radiotelephone. Moreover, the user interface **313** may include a keypad, a display (such as a liquid crystal display), a touch sensitive display, a dial, a speaker, a directional key, and/or a microphone. According to conventional radiotelephone operations, voice data may be received from a speaker of the user interface **313,** processed though controller **311,** and transmitted to the radiotelephone network using the long range transceiver **317.** Similarly, voice data may be received from the radiotelephone network using the long range transceiver **317,** processed though controller **311,** and reproduced using a speaker of user interface **313.** In addition or in an alternative, the long range transmitter may provide packet switched data service communications, such as General Packet Radio Service (GPRS), with a communications network.

In addition or in another alternative, the hand-held electronic device **301** may provide functionality of a personal digital assistant. For example, the controller **311** may run one or a plurality of applications such as a contacts database, a calendar, an e-mail transmitter/receiver, a digital music player, a task list, an internet browser, a word processor, a spread-sheet, a PDF file viewer, and/or presentation application (such as PowerPoint™ by Microsoft Corp.) with input being received from and output being provided to the user interface **313.** Accordingly, the hand-held electronic device **301** may provide both long range communications (such as radiotelephone and/or packet switched communications) and functionality of a personal digital assistant, or the hand-held electronic device **301** may provide functionality of a personal digital assistant without providing long range communications (in which case the long range transceiver **317** may be omitted).

The electronic display device **303** may be a free standing display device such as a projector, a monitor, or a television including an Internet protocol browser **333** therein, or the electronic display device **303** may be included as a component of a computing device such as a personal computer or a notebook computer. In some embodiments, the electronic display device **303** may be used to display image data received from the hand-held electronic device, image data received from a computer (such as a personal computer and/or a notebook computer), image data stored in the electronic display device, and/or image data received over a network **341** such as a local area network, a wide area network, and/or the internet. When displaying image data received over the network **341,** for example, the internet protocol browser **333** may query a server through the network **341** under direction of the controller **339** based on input from the user input device **337** (which may be a pointing device such as a mouse, track ball, joy stick, directional key, touch sensitive pad, touch sensitive display, etc.) associated with the electronic display device **303.** When displaying image data received from a computer, the controller **339** may be coupled directly with the computer providing the image data. An internet image projector is discussed, for example, in U.S. Patent Publication No. US 2002/0175915.

When displaying data from the hand-held electronic device **301,** a wireless link **325** can be established between the short range transceiver **315** of the hand-held electronic device **301** and the access point **335** of the electronic display device **303.**
The wireless link **325** may be provided, **for example,** using one or more of a WiFi standard (according to an IEEE 802.11 standard), a BlueTooth standard, and/or an infrared standard. Moreover, the wireless link **325** may include two or more wireless links provided according to the same or different communications standards. Accordingly, the short range transceiver **315** and the access point **335** may each include multiple transmitters and receivers operating according to the same or different communications standards.

For example, the wireless link **325** may include two sub-links with one sub-link being provided according to the BlueTooth standard and another sub-link being provided according to a WiFi standard. In an alternative, the wireless link **325** may include one sub-link provided according to the BlueTooth standard and another sub-link provided according to an infrared standard. In still another alternative, the wireless link **325** may include one sub-link provided according to the WiFi standard and another sub-link provided according to an infrared standard.

Image data may be stored in the memory **323** of the hand-held electronic device **301,** and the controller **311** may be configured to provide the image data in an Internet protocol format for transmission by the transmitter **319** over the wireless link **325** to the access point **335** of the electronic display device **303.** As shown in Figure 3, the access point may be coupled with network **341,** and the image data may be transmitted from the access point **335** through the network **341** to the internet protocol browser **333.** In some cases, it may be easier to cross the network **341** than to communicate the image from the access point **335** to the internet protocol browser **333** through the controller **339.** The image data can then be processed by the internet protocol browser **333** and the controller **339** and provided for viewing using display **331** (such as a cathode ray tube, liquid crystal display, plasma display, and/or projector).

The image data may be provided from the controller **311** of the hand-held electronic device **301** to the internet protocol browser **333** using an internet protocol format such as HyperText. Markup Language (HTML) and/or Extensible Markup Language (XML). Accordingly, the internet protocol browser **333** of the electronic display device **303** may act as a client, and the controller **311** of the hand-held electronic device **313** may act as a server.

In addition, user input from the user interface **313** of the hand-held electronic device **301** may be used to control a pointer function of the internet protocol browser **333** of the electronic display device **331.** Typically, the pointer function of an internet protocol browser is controlled using a user input device (such as a mouse, track ball, joy stick, directional key, touch sensitive pad, touch sensitive display, dial, etc.) physically associated with the device including the browser. In the electronic display device **301** of Figure 3, the pointer function of the internet protocol browser **333** may be controlled from the user input device **337** when displaying image data from the network **341.** In addition or in an alternative, the pointer function of the internet protocol browser **333** may be controlled by the controller **311** under the direction of the user interface **313** when displaying data from the network **341.**

When displaying image data from the hand-held electronic device **301,** the pointer function of the internet protocol browser **333** may be controlled from the user interface **313** of the hand-held electronic device **301.** For example, pointer commands may be generated by the controller **311** responsive to user input through a j oy stick, directional key, touch sensitive pad, touch sensitive display, dial, etc. of the user interface **313.** More particularly, pointer commands may be generated at the controller **311** responsive to user input at the user interface **313** and transmitted over the wireless link **325** to the internet protocol browser **313,** and the pointer function of the internet protocol browser **333** may be activated responsive to the pointer commands from the controller **311.** The internet protocol browser **333** can retrieve image data from the controller **311** and provide the image data on the display **331** responsive to the pointer commands received from the controller **311** over the wireless link **325.**

The pointer commands from the controller **311** may be buried in the stream of image data transmitted over the wireless link **325.** Accordingly, the image data and the pointer commands may be transmitted using a single logical data stream, for example, using a WiFi standard, a BlueTooth standard, and/or an infrared standard. When using a BlueTooth standard to transmit the image data, for example, a Human Interface Device (HID) profile provided by the BlueTooth standard may be used to transmit the pointer commands with the image data. When using an internet protocol format such as HTML and/or XML, the pointer commands may be buried in the data stream used to transmit the image data using any wireless link standard. In an alternative, the image data and the pointer commands may be transmitted using different data streams provided using the same or different wireless link standards.

In one alternative, the controller **311** may move the pointer within the application under direction of the user interface **313,** and the total image may be transferred to the electronic display device **303** without transferring the pointer commands to the electronic display device **303.** In a second alternative, the controller **311** may move the pointer within the application under direction of the user interface **337,** and the total image may be transferred to the electronic display device without transferring the pointer commands to the electronic display device **303.** Accordingly, the pointer commands may need to be transferred from the electronic display device **303** to the hand-held electronic device **301.** In a third alternative, the controller **311** may move the pointer in the browser **333** under the direction of the user interface **313.** Accordingly, the pointer commands may be transferred from the hand-held device **301** to the electronic display device **303.** In a fourth alternative, the controller **311** may move the pointer in the browser **313** under direction of the user interface **337.** Accordingly, the pointer commands may be transferred from the electronic display device **303** to the hand-held electronic device **301** and back to the electronic display device **303.** In a fifth alternative, the controller **339** may move the pointer in the browser **333** under the direction of the user interface **337.** Accordingly, image data may be transmitted from the hand-held electronic device **301** to the electronic display device **303** without transmitting pointer commands.

According to embodiments of the present invention, image data may be stored in memory **323** of hand-held electronic device **301,** transmitted from the hand-held electronic device over a wireless link **325** to an electronic display device **303** for viewing using display **331.** More particularly, a presentation (such as a PowerPoint™ presentation) may be downloaded to memory **323** (such as over a USB connection) or generated by controller **311** (responsive to user input) and stored in memory **323.** The presentation can then be easily transported in the hand-held electronic device to a meeting, and the presentation can be provided over a short range wireless link **325** to an electronic display device **303** in the meeting room. By providing display **331** as a projector or a monitor having a large screen, the presentation from the hand-held electronic device can be displayed to a large number of people.

Moreover, pointer commands from the user interface **313** of the hand-held electronic device **301** can be used to advance through slides of the presentation by activating a pointer function of the internet protocol browser **333.** In addition, the image data can also be provided on a display of the user interface **313** of the hand-held electronic device **301** at the same time that the image data is provided on display **331** of the electronic display device **303.** Accordingly, a presenter can use a display of the hand-held electronic device **301** to check the slide currently displayed without turning away from an audience to glance at the projected image.

In other embodiments, the electronic display device **303** may include a display **331** such as a monitor, cathode ray tube, liquid crystal display, plasma display, projector, etc. having an internet protocol browser **333** associated therewith. Image data can be transmitted over the wireless link **325** to allow the user to display personal information on the larger display **331** of the electronic display device **303** rather than using a much smaller display of the hand-held electronic device **301**. For example, the user may elect to view e-mail, to view a calendar, to view game screens, to view an internet page down loaded to the hand-held electronic device, to view a photograph stored in the hand-held electronic device, to view a video clip stored in the hand-held electronic device, etc. using a remote electronic display device **303** as shown in Figure 3.

The controller **339** of the electronic display device **303** may also police access to the internet protocol browser **333** through the access point **335.** In other words, the controller **339** may only allow authorized hand-held electronic devices **301** to have access to the internet protocol browser **333.** In a home or business environment, an authorized hand-held electronic device **301** may be assigned an access code so that the controller **339** of the electronic display device **331** can identify the presence of the authorized hand-held electronic device **301** and allow access to the internet protocol browser 333. For example, the previously assigned access code may be stored in memory **323** of the hand-held electronic device **301,** and the previously assigned access code may be transmitted over the wireless link **325** responsive to either a user command provided at the user interface **313** or responsive to a query or beacon from the electronic display device **303.** Moreover, in a closed or secure environment, the hand-held electronic device may automatically detect the presence of an available electronic device **303,** and the application being run on the hand-held electronic device may be provided automatically on the display **331** of the available electronic display device **303.**

In a public environment, the controller **339** of the electronic display device **303** may only allow access to previously authorized hand-held electronic devices **301** with access codes as discussed above. By recording access codes of hand-held electronic devices to which access has been granted, the controller **339** can track usage for billing purposes. By way of example, a radiotelephone may have a identification number such as a Mobile Identification Number (MIN) and/or an Electronic Serial Number (ESN) that can be used by the controller 339 to determine whether to grant access and/or track billing information. Other information, such as may be provided on a Secure Interface Module (SIM) card may also be used.

In an alternative, the controller **339** may grant access to a hand-held electronic device **301** based on entry and verification of payment information, such as a credit card number. For example, a user of a hand-held electronic device **301** may initiate a session with the electronic display device **303,** and responsive to a query from the electronic display device **303,** the user may enter credit card information through the user interface **313,** and the credit card information may be transmitted over the wireless link **325.**

The sharing of image data over the wireless link **325** may be initiated by a user of the hand-held electronic device **301** upon recognizing the physical presence of an electronic display device **303** and entering commands through the user interface **313** to establish the wireless link **325.** In an alternative, the access point **335** may wirelessly transmit an identification beacon, and upon receipt of the beacon, the hand-held electronic device **301** may automatically establish the wireless link **325** (with appropriate authorization). In another alternative, a prompt may be provided on the user interface **313** to identify the available electronic display device **303** upon receipt of the beacon from the access point **335.** In yet another alternative, a beacon may be transmitted by the hand-held electronic device **301,** and upon receipt of the beacon, the access point **335** may respond with an indication of availability. Upon receipt of the indication of availability, the wireless link **325** may be established automatically, or a prompt may be provided at the user interface **313** with user input being required to establish the wireless link **325.**

In the drawings and specification, there have been disclosed typical preferred embodiments of the invention and, although specific terms are employed, they are used in a generic and descriptive sense only and not for purposes of limitation, the scope of the invention being set forth in the following claims. As used herein, the term "comprising" or "comprises" is open-ended, and includes one or more stated elements, steps, and/or functions.

Moreover, blocks of Figures 1-3 as discussed above represent various functionalities which may be implemented using hardware, software, and/or combinations thereof. Moreover, portions of functionalities of a particular block or all functionality of a particular block may be implemented in other blocks. For example, the memory of a hand-held electronic device may instead be implemented as a portion of the controller of the hand-held electronic device. Similarly, the internet protocol browser of an electronic display device may be implemented as a part of the controller of the electronic display device.

## Claims

1. A hand-held electronic device (101; 201; 301) comprising:
memory (123; 223; 323) configured to store image data within the hand-held electronic device;
a transmitter (119; 219; 319) configured to provide a wireless link (125; 225; 325) with a remote electronic display (103; 203; 303) including an Internet protocol browser (133; 233; 333); and
a controller (111; 211; 311) coupled to the memory and to the transmitter wherein the controller is configured to provide the image data in an Internet protocol format and wherein the transmitter is configured to transmit the image data over the wireless link in the Internet protocol format;
**characterised in that** the device further comprises:
a user interface (113; 213; 313) coupled to the controller wherein the user interface is configured to accept user input of pointer commands used to control a pointer function of the Internet protocol browser of the remote electronic display and wherein the controller and transmitter are configured to transmit the pointer commands over the wireless link to the remote electronic display to control the pointer function of the Internet protocol browser.

2. A hand held electronic device according to Claim 1 wherein the controller is configured to act as a server with respect to the browser of the remote electronic display acting as a client.

3. A hand-held electronic device according to Claim 1 wherein the pointer commands are transmitted in the Internet protocol format.

4. A hand-held electronic device according to Claim 1 wherein the pointer commands are transmitted in a format other then the Internet protocol format.

5. A hand-held electronic device according to Claim 1 wherein the transmitter comprises a short range transmitter, the hand-held electronic device further comprising a long range transceiver (117; 217; 317) configured to provide long-range communications.

6. A hand-held electronic device according to Claim 1 wherein the transmitter is configured to provide a wireless link according to at least one of a WiFi standard, a BlueTooth standard, and/or an infrared standard.

7. A hand-held electronic devices according to Claim 1 wherein the Internet protocol format comprises at least one of HTML and/or XML.

8. A hand-held Electronic device according to Claim 1 wherein the contoller further provides at least one of a contacts database, a calendar, an e-mail transmitter/receiver, a digital music player, a task list, and/or a wireless internet browser.

9. A hand-held electronic device according to Claim 1 wherein the image data comprises a slide presentation.

10. An electronic display device (103; 203; 303) comprising:
a display (131; 231; 331) configured to display electronic data;
a controller (139; 239; 339) configured to provide an Internet protocol browser (133; 233; 333),
wherein the controller is configured to receive image data from a hand-held electronic device (101; 201; 301) with a wireless coupling to the hand-held electronic device, **characterized in that** the controller is further configured to receive pointer commands from the hand-held electronic device with the wireless coupling to use the pointer commands to control a pointer function of the Internet protocol browser, wherein the controller is configured to receive the image data in an Internet protocol format, and wherein the controller is configured to provide the image data visually using the display responsive to the pointer commands from the hand-held electronic device.

11. An electronic display device according to Claim 10 wherein the controller is configured to act as a client with respect to a controller of the hand held electronic device acting as a server.

12. An electronic display device according to Claim 10 wherein the display comprises at least one of a monitor and/or a projector.

13. An electronic display device according to Claim 10 wherein the pointer commands are received at the controller in the Internet protocol format.

14. An electronic display advice according to Claim 10 wherein the controller is configured to receive the pointer commands in a format other than the Internet protocol format.

15. An electronic display device according to Claim 10 wherein the Internet protocol format comprises at least one of HTML and/or XML.

16. An electronic display device according to Claim 10 wherein the image data comprises a slide presentation.

17. A method of providing a visual presentation using a hand-held electronic device (101; 201; 301), the method comprising:
storing image data within the band-held electronic device;
providing the image data in an Internet protocol format;
transmitting the image data over a wireless link (125; 225 ; 325; to a remote electronic display (103; 203 ; 303) in the Internet protocol format wherein the remote electronic display incudes an Internet protocol browser (133, 233; 333);
**characterised in that** the method further comprises the steps of:
accepting user input of pointer commands used to control a pointer function of the Internet protocol browser of the remote electronic display; and
transmitting the pointer commands over the wireless link to the remote electronic display to control the pointer function of the Internet protocol browser.

18. A method according to Claim 17 wherein the hand held electronic device is configured to act as a server with respect to the controller of the remote electronic display acting as a client.

19. A method according to Claim 18 wherein the pointer commands are transmitted in the Internet protocol format.

20. A method according to Claim 18 wherein the pointer commands are transmitted in a format other than the Internet protocol format.

21. A method according to Claim 17 wherein the image data is transmitted using a short range protocol, the method further comprising:
providing long-range wireless communications.

22. A method according to Claim 1 7 wherein transmitting the image data comprises transmitting the image data using at least one of a WiFi standard, a BlueTooth standard, and/or an infrared standard.

23. A method according to Claim 17 wherein the Internet protocol format comprises at least one of HTML and/or XML.

24. A method according to Claim 17 further comprising:
providing at least one of a contacts database, a calendar, an e-mail transmitter/receiver, a digital music player, a task list, and/or a wireless internet browser.

25. A method according to Claim 17 wherein the image data comprises a slide presentation.

26. A method of operating an electronic display device (103; 203; 303) including an Internet protocol browser (133; 233; 333), the method comprising:
receiving image data from a hand-held electronic device (101; 201; 301) with a wireless coupling to the hand-held electronic device, wherein the image data is received in an Internet protocol format **characterized in that** the method further comprises receiving pointer commands from the hand-held electronic device the wireless coupling and wherein the pointer commands are used to control a pointer function of an Internet protocol browser of the electronic display device; and
providing the image data visually responsive to the pointer commands.

27. A method according to Claim 26 wherein the Internet protocol browser is configured to act as a client with respect to controller (111; 211,311) of the hand-held electronic device acting as a server.

28. A method according to Claim 26 wherein providing the image data comprises providing the image data using at least one of a monitor and/or a projector (131; 231; 331).

29. A method according to Claim 26 wherein the pointer commands are received at the Internet protocol browser in the Internet protocol format.

30. A method according to Claim 26 wherein the pointer commands are received at the Internet protocol browser in a format other than the Internet protocol format.

31. A method according to Claim 26 wherein the Internet protocol format comprises at least one of HTML and/or XML.

32. A method according to Claim 26 wherein the image data comprises a slide presentation.

## Patentansprüche

1. Elektronische Vorrichtung (101; 201; 301), die in der Hand zu halten ist, umfassend:
einen Speicher (123; 223; 323), der dafür konfiguriert ist, Bilddaten in der handgehaltenen elektronischen Vorrichtung zu speichern;
einen Sender (119; 219; 319), der dafür konfiguriert ist, eine drahtlose Verbindung (125; 225; 325) mit einer entfernten elektronischen Anzeige (103; 203; 303) herzustellen, die einen Internet-Protokoll-Browser (133; 233; 333) enthält; und
einen Controller (111; 211; 311), der mit dem Speicher und dem Sender verbunden ist, wobei der Controller dafür konfiguriert ist, die Bilddaten in einem Internet-Protokoll-Format zu liefern, und der Sender dafür konfiguriert ist, die Bilddaten über die drahtlose Verbindung in dem Internet-Protokoll-Format zu übertragen;
**dadurch gekennzeichnet, dass** die Vorrichtung zudem umfasst:
eine Benutzerschnittstelle (113; 213; 313), die mit dem Controller verbunden ist, wobei die Benutzerschnittstelle dafür konfiguriert ist, Benutzereingaben von Zeigerbefehlen anzunehmen, die dazu verwendet werden, eine Zeigerfunktion des Internet-Protokoll-Browsers der entfernten elektronischen Anzeige zu steuern, und der Controller und der Sender dafür konfiguriert sind, die Zeigerbefehle über die drahtlose Verbindung an die entfernte elektronische Anzeige zu übertragen, damit die Zeigerfunktion des Internet-Protokoll-Browsers kontrolliert wird.

2. Handgehaltene elektronische Vorrichtung nach Anspruch 1, wobei der Controller dafür konfiguriert ist, als Server bezüglich des Browsers der entfernten elektronischen Anzeige zu arbeiten, die als Client arbeitet.

3. Handgehaltene elektronische Vorrichtung nach Anspruch 1, worin die Zeigerbefehle im Internet-Protokoll-Format übertragen werden.

4. Handgehaltene elektronische Vorrichtung nach Anspruch 1, worin die Zeigerbefehle in einem Format übertragen werden, das nicht das Internet-Protokoll-Format ist.

5. Handgehaltene elektronische Vorrichtung nach Anspruch 1, wobei der Sender einen Nahbereichssender umfasst, und die handgehaltene elektronische Vorrichtung zudem einen Fernbereichssender (117; 217; 317) umfasst, der dafür konfiguriert ist, Kommunikationsvorgänge im Fernbereich bereitzustellen.

6. Handgehaltene elektronische Vorrichtung nach Anspruch 1, wobei der Sender dafür konfiguriert ist, eine drahtlose Verbindung gemäß mindestens einem der folgenden Standards zu liefern, nämlich dem WiFi-Standard, dem BlueTooth-Standard und/oder einem Infrarot-Standard.

7. Handgehaltene elektronische Vorrichtung nach Anspruch 1, wobei das Internet-Protokoll-Format zumindest entweder HTML und/oder XML umfasst.

8. Handgehaltene elektronische Vorrichtung nach Anspruch 1, wobei der Controller mindestens eines der folgenden Merkmale bereitstellt, nämlich eine Kontakt-Datenbank, einen Kalender, einen Email-Sender/Empfänger, eine digitale Musikwiedergabevorrichtung, eine Aufgabenliste, und/oder einen drahtlosen Internetbrowser.

9. Handgehaltene elektronische Vorrichtung nach Anspruch 1, wobei die Bilddaten die Darstellung von stationären Bildern umfassen.

10. Elektronische Anzeigevorrichtung (103; 203; 303), umfassend;
eine Anzeige (131; 231; 331), die für das Anzeigen von elektronischen Daten konfiguriert ist;
einen Controller (139; 239; 339), der dafür konfiguriert ist, einen Internet-Protokoll-Browser (133; 233; 333) bereitzustellen,
wobei der Controller dafür konfiguriert ist, Bilddaten von einer handgehaltenen elektronischen Vorrichtung (101; 201; 301) zu empfangen, und zwar über eine drahtlose Verbindung zu der handgehaltenen Vorrichtung, **dadurch gekennzeichnet, dass** der Controller zudem dafür konfiguriert ist, Zeigerbefehle von der handgehaltenen elektronischen Vorrichtung mit der drahtlosen Verbindung zu empfangen, damit die Zeigerbefehle zum Steuern einer Zeigerfunktion des Internet-Protokoll-Browsers verwendet werden, wobei der Controller dafür konfiguriert ist, die Bilddaten in einem Internet-Protokoll-Format zu empfangen, und der Controller dafür konfiguriert ist, die Bilddaten sichtbar mit Hilfe der Anzeige bereitzustellen, und zwar abhängig von den Zeigerbefehlen von der handgehaltenen elektronischen Vorrichtung.

11. Elektronische Anzeige nach Anspruch 10, wobei der Controller dafür konfiguriert ist, als Client bezüglich eines Controllers der handgehaltenen elektronischen Vorrichtung zu arbeiten, der als Server arbeitet.

12. Elektronische Anzeige nach Anspruch 10, wobei die Anzeige zumindest entweder einen Monitor und/oder einen Projektor umfasst.

13. Elektronische Anzeige nach Anspruch 10, worin die Zeigerbefehle am Controller im Internet-Protokoll-Format empfangen werden.

14. Elektronische Anzeige nach Anspruch 10, wobei der Controller dafür konfiguriert ist, die Zeigerbefehle in einem Format zu empfangen, das nicht das Internet-Protokoll-Format ist.

15. Elektronische Anzeige nach Anspruch 10, wobei das Internet-Protokoll-Format zumindest entweder HTML und/oder XML umfasst.

16. Elektronische Anzeige nach Anspruch 10, wobei die Bilddaten die Darstellung von stationären Bildern umfassen.

17. Verfahren zum Bereitstellen einer sichtbaren Darstellung mit Hilfe einer handgehaltenen elektronischen Vorrichtung (101; 201; 301), umfassend:
das Speichern von Bilddaten in der handgehaltenen elektronischen Vorrichtung;
das Liefern der Bilddaten in einem Internet-Protokoll-Format;
das Übertragen der Bilddaten über eine drahtlose Verbindung (125; 225; 325) an eine entfernte elektronische Anzeige (103; 203; 303) im Internet-Protokoll-Format, wobei die entfernte elektronische Anzeige einen Internet-Protokoll-Browser (133; 233; 333) enthält;
**dadurch gekennzeichnet, dass** das Verfahren ferner die Schritte umfasst:
das Annehmen von Benutzereingaben für Zeigerbefehle, die dazu dienen, die Zeigerfunktion des Internet-Protokoll-Browsers der entfernten elektronischen Anzeige zu steuern; und
das Übertragen der Zeigerbefehle über die drahtlose Verbindung zu der entfernten elektronischen Anzeige, damit die Zeigerfunktion des Internet-Protokoll-Browsers gesteuert wird.

18. Verfahren nach Anspruch 17, wobei die handgehaltene elektronische Vorrichtung dafür konfiguriert ist, als Server bezüglich des Controllers der entfernten elektronischen Anzeige zu arbeiten, die als Client arbeitet.

19. Verfahren nach Anspruch 18, wobei die Zeigerbefehle im Internet-Protokoll-Format übertragen werden.

20. Verfahren nach Anspruch 18, wobei die Zeigerbefehle in einem Format übertragen werden, das nicht das Internet-Protokoll-Format ist.

21. Verfahren nach Anspruch 17, wobei die Bilddaten mit Hilfe eines Nahbereichsprotokolls übertragen werden, und das Verfahren weiterhin umfasst:
das Bereitstellen von drahtlosen Kommunikationsvorgängen im Fernbereich.

22. Verfahren nach Anspruch 17, wobei das Übertragen der Bilddaten das Übertragen der Bilddaten mit Hilfe zumindest eines der folgenden Standards umfasst, nämlich dem WiFi-Standard, dem BlueTooth-Standard und/oder einem Infrarot-Standard.

23. Verfahren nach Anspruch 17, wobei das Internet-Protokoll-Format zumindest entweder HTML und/oder XML umfasst.

24. Verfahren nach Anspruch 17, auch umfassend:
das Bereitstellen von mindestens einem der folgenden Merkmale, nämlich eine Kontakt-Datenbank, einen Kalender, einen Email-Sender/Empfänger, eine digitale Musikwiedergabe, eine Aufgabenliste, und/oder einen drahtlosen Internetbrowser.

25. Verfahren nach Anspruch 17, wobei die Bilddaten die Darstellung von stationären Bildern umfassen.

26. Verfahren zum Betreiben einer elektronischen Anzeigevorrichtung (103; 203; 303), die einen Internet-Protokoll-Browser (133; 233; 333) enthält, umfassend:
das Empfangen von Bilddaten von einer handgehaltenen elektronischen Vorrichtung (101; 201; 301) mit einer drahtlosen Anbindung an die handgehaltene elektronische Vorrichtung, wobei die Bilddaten in einem Internet-Protokoll-Format empfangen werden, **dadurch gekennzeichnet, dass** das Verfahren zudem das Empfangen von Zeigerbefehlen von der handgehaltenen elektronischen Vorrichtung mit der drahtlosen Anbindung umfasst, und die Zeigerbefehle dazu verwendet werden, eine Zeigerfunktion eines Internet-Protokoll-Browsers der elektronischen Anzeigevorrichtung zu steuern; und
das Bereitstellen der Bilddaten in sichtbarer Form als Reaktion auf die Zeigerbefehle.

27. Verfahren nach Anspruch 26, wobei der Internet-Protokoll-Browser dafür konfiguriert ist, als Client bezüglich eines Controllers (111; 211; 311) der handgehaltenen elektronischen Vorrichtung zu arbeiten, der als Server arbeitet.

28. Verfahren nach Anspruch 26, wobei das Liefern der Bilddaten das Bereitstellen der Bilddaten mit Hilfe zumindest entweder eines Monitors und/oder eines Projektors (131; 231; 331) umfasst.

29. Verfahren nach Anspruch 26, wobei die Zeigerbefehle am Internet-Protokoll-Browser im Internet-Protokoll-Format empfangen werden.

30. Verfahren nach Anspruch 26, wobei die Zeigerbefehle am Internet-Protokoll-Browser in einem Format empfangen werden, das nicht das Internet-Protokoll-Format ist.

31. Verfahren nach Anspruch 26, wobei das Internet-Protokoll-Format zumindest entweder HTML und/oder XML umfasst.

32. Verfahren nach Anspruch 26, wobei die Bilddaten die Darstellung von stationären Bildern umfassen.

## Revendications

1. Dispositif électronique portable (101 ; 201 ; 301) comprenant :
une mémoire (123 ; 223 ; 323) configurée pour stocker des données d'image dans le dispositif électronique portable ;
un émetteur (119 ; 219 ; 319) configuré pour établir une liaison sans fil (125 ; 225 ; 325) avec un système d'affichage électronique à distance (103 ; 203 ; 303) comprenant un navigateur de protocole Internet (133 ; 233 ; 333) ; et
un dispositif de commande (111 ; 211 ; 311) couplé à la mémoire et à l'émetteur dans lequel le dispositif de commande est configuré pour fournir les données d'image dans un format de protocole Internet et dans lequel l'émetteur est configuré pour transmettre lés données d'image sur la liaison sans fil dans le format de protocole Internet ;
**caractérisé en ce que** le dispositif comprend en autre ;
une interface utilisateur (113 ; 213 ; 313) couplée au dispositif de commande dans lequel l'interface utilisateur est configurée pour accepter une entrée utilisateur de commandes de pointeur utilisées pour commander une fonction de pointeur du navigateur de protocole Internet du système d'affichage électronique à distance et dans lequel le dispositif de commande et l'émetteur sont configurés pour transmettre les commandes de pointeur sur la liaison sans fil au système d'affichage électronique à distance afin de commander la fonction de pointeur du navigateur de protocole Internet.

2. Dispositif électronique portable selon la revendication 1, dans lequel le dispositif de commande est configuré pour servir de serveur par rapport au navigateur du système d'affichage électronique à distance servant de client.

3. Dispositif électronique portable selon la revendication 1, dans lequel les commandes de pointeur sont transmises dans le format de protocole Internet.

4. Dispositif électronique portable selon la revendication 1, dans lequel les commandes de pointeur sont transmises dans un format autre que le format de protocole Internet.

5. Dispositif électronique portable selon la revendication 1, dans lequel l'émetteur comprend un émetteur courte portée, le dispositif électronique portable comprenant en outre un émetteur-récepteur longue portée (117 ; 217 ; 317) configuré pour établir des communications longue portée.

6. Dispositif électronique portable selon la revendication 1, dans lequel l'émetteur est configuré pour établir une liaison sans fil en fonction d'au moins un élément parmi une norme WiFi, une norme BlueTooth, et/ou une norme infrarouge.

7. Dispositif électronique portable selon la revendication 1, dans lequel le format de protocole Internet comprend au moins un élément parmi HTML et/ou XML.

8. Dispositif électronique portable selon la revendication 1, dans lequel le dispositif de commande fournit en outre au moins un élément parmi une base de données de contacts, un calendrier, un émetteur-récepteur de courrier électronique, un lecteur de musique numérique, une liste de tâches et/ou un navigateur Internet sans fil.

9. Dispositif électronique portable selon la revendication 1, dans lequel les données d'image comprennent un diaporama.

10. Dispositif d'affichage électronique (103 ; 203 ; 303) comprenant :
un système d'affichage (131 ; 231 ; 331) configuré pour afficher des données électroniques ;
un dispositif de commande (139 ; 239 ; 339) configuré pour fournir un navigateur de protocole Internet (133 ; 233 ; 333),
dans lequel le dispositif de commande est configuré pour recevoir des données d'image en provenance d'un dispositif électronique portable (101; 201 ; 301) avec un couplage sans fil au dispositif électronique portable, **caractérisé en ce que** le dispositif de commande est en outre configuré pour recevoir des commandes de pointeur en provenance du dispositif électronique portable avec le couplage sans fil, pour utiliser les commandes de pointeur afin de commander une fonction de pointeur du navigateur de protocole Internet, dans lequel le dispositif de commande est configuré pour recevoir les données d'image dans un format de protocole Internet, et dans lequel le dispositif de commande est configuré pour fournir les données d'image visuellement à l'aide du système d'affichage en réponse aux commandes de pointeur en provenance du dispositif électronique portable.

11. Dispositif d'affichage électronique selon la revendication 10,
dans lequel le dispositif de commande est configuré pour servir de client par rapport à un dispositif de commande du dispositif électronique portable servant de serveur.

12. Dispositif d'affichage électronique selon la revendication 10,
dans lequel le système d'affichage comprend au moins un élément parmi un moniteur et/ou un projecteur.

13. Dispositif d'affichage électronique selon la revendication 10,
dans lequel les commandes de pointeur sont reçues au niveau du dispositif de commande dans le format de protocole Internet.

14. Dispositif d'affichage électronique selon la revendication 10,
dans lequel le dispositif de commande est configuré pour recevoir les commandes de pointeur dans un format autre que le format de protocole Internet.

15. Dispositif d'affichage électronique selon la revendication 10,
dans lequel le format de protocole Internet comprend au moins un élément parmi HTML et/ou XML.

16. Dispositif d'affichage électronique selon la revendication 10,
dans lequel les données d'image comprennent un diaporama.

17. Procédé de fourniture d'une présentation visuelle à l'aide d'un dispositif électronique portable (101 ; 201 ; 301), le procédé comprenant :
le stockage de données d'image dans le dispositif électronique portable ;
la fourniture des données d'image dans un format de protocole Internet ;
la transmission des données d'image sur une liaison sans fil (125 ; 225 ; 325) à un système d'affichage électronique à distance (103 ; 203 ; 303) dans le format de protocole Internet dans lequel le système d'affichage électronique à distance comprend un navigateur de protocole Internet (133 ; 233 ; 333) ;
**caractérisé en ce que** le procédé comprend en outre les étapes consistant à :
accepter une entrée utilisateur de commandes de pointeur utilisées pour commander une fonction de pointeur du navigateur de protocole Internet du système d'affichage électronique à distance ; et
transmettre les commandes de pointeur sur la liaison sans fil au système d'affichage électronique à distance afin de commander la fonction de pointeur du navigateur de protocole Internet.

18. Procédé selon la revendication 17, dans lequel le dispositif électronique portable est configuré pour servir de serveur par rapport au dispositif de commande du système d'affichage électronique à distance servant de client.

19. Procédé selon la revendication 18, dans lequel les commandes de pointeur sont transmises dans le format de protocole Internet.

20. Procédé selon la revendication 18, dans lequel les commandes de pointeur sont transmises dans un format autre que le format de protocole Internet.

21. Procédé selon la revendication 17, dans lequel les données d'image sont transmises à l'aide d'un protocole courte portée, le procédé comprenant en outre :
l'établissement de communications sans fil longue portée.

22. Procédé selon la revendication 17, dans lequel la transmission des données d'image comprend la transmission des données d'image à l'aide d'au moins un élément parmi une norme WiFi, une norme BlueTooth, et/ou une norme infrarouge.

23. Procédé selon la revendication 17, dans lequel le format de protocole Internet comprend au moins un élément parmi HTML et/ou XML.

24. Procédé selon la revendication 17, comprenant en outre :
la fourniture d'au moins un élément parmi une base de données de contacts, un calendrier, un émetteur-récepteur de courrier électronique, un lecteur de musique numérique, une liste de tâches et/ou un navigateur Internet sans fil.

25. Procédé selon la revendication 17, dans lequel les données d'image comprennent un diaporama.

26. Procédé de fonctionnement d'un dispositif d'affichage électronique (103 ; 203 ; 303) comprenant un navigateur de protocole Internet (133 ; 233 ; 333), le procédé comprenant :
la réception de données d'image en provenance d'un dispositif électronique portable (101 ; 201 ; 301) avec un couplage sans fil au dispositif électronique portable, dans lequel les données d'image sont reçues dans un format de protocole Internet, **caractérisé en ce que** le procédé comprend en outre la réception de commandes de pointeur en provenance du dispositif électronique portable avec le couplage sans fil et
dans lequel les commandes de pointeur sont utilisées pour commander une fonction de pointeur d'un navigateur de protocole Internet du dispositif d'affichage électronique ; et
la fourniture des données d'image visuellement en réponse aux commandes de pointeur.

27. Procédé selon la revendication 26, dans lequel le navigateur de protocole Internet est configuré pour servir de client par rapport au dispositif de commande (111 ; 211 ; 311) du dispositif électronique portable servant de serveur.

28. Procédé selon la revendication 26, dans lequel la fourniture des données d'image comprend la fourniture des données d'image à l'aide d'au moins un élément parmi un moniteur et/ou un projecteur (131 ; 231 ; 331).

29. Procédé selon la revendication 26, dans lequel les commandes de pointeur sont reçues au niveau du navigateur de protocole Internet dans le format de protocole Internet.

30. Procédé selon la revendication 26, dans lequel les commandes de pointeur sont reçues au niveau du navigateur de protocole Internet dans un format autre que le format de protocole Internet.

31. Procédé selon la revendication 26, dans lequel le format de protocole Internet comprend au moins un élément parmi HTML et/ou XML.

32. Procédé selon la revendication 26, dans lequel les données d'image comprennent un diaporama.
